# EUROPEAN PATENT SPECIFICATION

(11) **EP 4 146 734 B1**
(45) Date of publication and mention of the grant of the patent: **02.09.2026**
(21) Application number: 21716773.3
(22) Date of filing: 12.04.2021
(51) Int. Cl.: C08L 9/00, C08L 21/00, B60C 1/00, C08L 9/06

(54) **RUBBER MIXTURES WITH IMPROVED PROPERTIES**
GUMMIGEMISCHE MIT VERBESSERTEN EIGENSCHAFTEN
MÉLANGES DE CAOUTCHOUC PRÉSENTANT DES PROPRIÉTÉS AMÉLIORÉES

(30) Priority: 04.05.2020 EP 20172688
(43) Date of publication of application: 15.03.2023
(73) Proprietor: Evonik Operations GmbH, 45128 Essen (DE)
(72) Inventor: KRANNIG, Kai-Steffen, 44229 Dortmund (DE); VAIKUNTAM, Sankar Raman, 50389 Wesseling (DE); WEHMEIER, André, 53332 Bornheim (DE)
(74) Representative: Evonik Patent Association
(86) International application number: PCT/EP2021/059389
(87) International publication number: WO 2021/223961

(56) References cited:
- EP-A1- 1 035 164
- EP-A1- 3 677 635
- EP-A1- 3 677 637
- EP-A1- 3 677 638
- WO-A1-2018/130703
- WO-A1-2019/044888
- WO-A1-2019/044889
- WO-A1-2019/044891
- WO-A1-2019/044893
- DE-A1- 102015 210 424
- DE-T5- 112016 001 718
- JP-A- 2009 203 288
- JP-A- 2019 094 463
- US-A1- 2018 072 874
- US-A1- 2020 207 957
- TOTAL: "Ricon(RTM) 142 - Technical Data Sheet", 31 May 2020 (2020-05-31), USA, pages 1 - 1, XP055802090, Retrieved from the Internet <URL:https://www.crayvalley.com/docs/default-source/tds/ricon-142_cr-bm-li-614_05192020.pdf?sfvrsn=fac5acd0_6> [retrieved on 20210506]
- TOTAL: "Ricon (RTM) 150 - High Vinyl Homopolymer of Butadiene", 31 May 2020 (2020-05-31), pages 1 - 1, XP055802097, Retrieved from the Internet <URL:https://www.crayvalley.com/docs/default-source/tds/ricon-150.pdf?sfvrsn=4f597ca3_6> [retrieved on 20210506]

## Description

The present invention relates to a rubber mixture comprising rubber and a liquid polybutadiene, the polybutadiene being liquid at a temperature of 20 °C and a pressure of 98.0665 kPa, wherein the liquid polybutadiene only consists of C- and H-atoms, and has an average molecular weight (Mw), determined by gel permeation chromatography as described in the description, of from 1500 to 5000 g/mol, to a process for preparing rubber articles by vulcanization using the inventive rubber mixtures as raw material, and to rubber articles obtained by this process.

So called "Green Tires" are a trend in the automobile industry. The main objective is reducing rolling resistance, and thus fuel consumption, wet grip improvement while keeping the abrasion resistance constant. Addition of precipitated silicas to the formulations can achieve this objective but the silicas employed exhibit poor compatibility with the rubber matrix. This problem is currently ameliorated by addition of silanes as compatibilizers. Covalent bonding between the filler and the polymer brings the abrasion level of silica-filled tires in line with that of carbon black-filled tires.

Thus, JP 2008-031244 discloses a tire tread rubber composition composed of at least either a natural rubber or a synthetic rubber and a filler component composed exclusively of silicas or of silicas and carbon black, wherein the silica is composed of at least amorphous spherical silicon dioxide microparticles having an average particle diameter in the range from 0.05 to 1.00 µm.

JP 2015-083649, US 20140121316 or EP 2266819 describe the functionalization of anionically polymerized polybutadienes. EP 1479698 describes the functionalization of polybutadienes having a vinyl content below 2%.

EP 2818505 proposes a rubber mixture where diene rubbers are reacted with acrylamides and/or with silane- or tin-modified acrylamides. The production of the systems described in the prior art is highly complex.

WO2019/044888 A1 (EP 3677637 A1) describes rubber compositions comprising modified liquid polybutadiene comprising functional groups, e.g. hydroxyl groups, with a vinyl content of less than 70 % and a Mw of from 1000 to 15000 g/mol.

WO2019/044889 A1 (EP 3677635 A1) describes rubber compositions comprising modified liquid diene based rubber comprising a functional groups derived from a silane compound, with a vinyl content of less than 70 % and a Mw of from 15000 to 120000 g/mol.

WO2019/044893 A1 (EP 3677638 A1) describes rubber compositions for heavy duty tires comprising modified liquid diene based rubber comprising a functional groups derived from a silane compound, with a vinyl content of from 30 % up to less than 70 % and a Mw of from 1000 to 120000 g/mol.

JP 2019094463 A describes rubber compositions for a tire and a pneumatic tire comprising liquid polybutadiene with a vinyl content of more than 80 % and a Mw of from 1000 to 18000 g/mol, most preferred 1000 to 5000 g/mol.

DE 10 2015 210424 A1 describes rubber compositions comprising modified liquid polybutadiene rubber comprising organo-silicon end groups with a vinyl content of less than 70 % and a Mw of from 500 to 12000 g/mol, and a plasticizer.

EP 1 035 164 A1 describes rubber compositions for tire treads comprising liquid polybutadiene with a vinyl content of about 85 % and a Mw of 4700 g/mol.

JP 2009 203288 A describes rubber compositions comprising liquid polybutadiene with a vinyl content of less than 50 % and a Mw of from 2000 to 10000 g/mol. The composition further comprises an ester plasticizer.

WO2019/044891 A1 (US 2020/207957 A1) describes rubber compositions comprising modified liquid diene-based rubber comprising a functional groups derived from a silane compound, with a vinyl content of less than 70 % and a Mw of from 15000 to 120000 g/mol.

US 2018/072874 A1 describes rubber compositions comprising modified liquid diene-based rubber comprising a functional-groups derived from a carboxy group containing nitrone compound.

Many rubber mixtures used in the rubber and tire industry comprise plasticizers to make the processing easier and to adjust the mechanic and dynamic mechanic properties to the needs of the use application.

A significant disadvantage of the use of plasticizers is their tendency to migrate out of the article made of (vulcanized) rubber over time. Therefore, the properties of the rubber article change over time, too.

An externally perceptible indication sign of this effect is, for example, an increase in the hardness of the vulcanizate and/or embrittlement, which is accompanied by a deterioration in elasticity.

Many of the plasticizer oils contain high amounts of aromatic compounds. Nowadays there is a high demand to reduce or even eliminate such materials in rubber applications for environmental and health reasons.

To solve these problems and challenges reactive plasticizers are used frequently. One kind of reactive plasticizer is for example liquid polybutadiene (see for example US 7,411,018 B2). The reactive plasticizers improve the processing of the rubber mixtures and have the further advantage, that they react with other parts of the rubber mixture and therefore are essentially unable to migrate from the vulcanized rubber article.

However, the use of reactive plasticizers results in tires with deteriorated rolling resistance and higher fuel consumption if a tire is equipped with a tread based on rubber mixtures comprising these reactive plasticizers.

There is accordingly a need for improved rubber mixtures obtainable in simple fashion and exhibiting improved properties.

When comparing the use of different liquid polybutadienes, the inventors surprisingly found, that liquid polybutadienes comprising a high amount of 1,2-vinyl groups improves not only the processing of these rubber mixtures but also the rolling resistance of a tire (tread) made thereof.

The present invention therefore relates to a rubber mixture comprising rubber and a liquid polybutadiene, the polybutadiene being liquid at a temperature of 20 °C and a pressure of 98.0665 kPa, wherein the liquid polybutadiene only consists of C- and H-atoms, and has an average molecular weight (Mw), determined by gel permeation chromatography as described in the description, of from 1500 to 5000 g/mol, and is comprising a high amount of 1,2-vinyl groups, as claimed in the claims.

The present invention is also directed to a process for preparing rubber articles by vulcanization using the inventive rubber mixtures as raw material.

The present invention is further directed to rubber articles obtained by the process according to the invention.

The rubber mixture according to the invention have very good processing properties indicated by very good dynamic mechanical properties.

Rubber articles obtained by vulcanization using the inventive rubber mixtures as raw material have the advantage, that they show a high tensile strength value as well as a high elongation at break value.

Tires or tire treads obtained by processing and vulcanizing the rubber mixture according to the invention have the advantage, that they show good rolling resistance, low abrasion, and good driving indicators in winter / on snow. The low rolling resistance has the advantage, that the use of such tires helps to reduce the fuel consumption of a vehicle.

The mixtures, processes, and products/uses according to the invention are described by way of example hereinafter, without any intention that the invention be restricted to these illustrative embodiments. When ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified hereinbelow are by weight unless otherwise stated. Where average values are reported hereinafter, these are the numerical average, unless stated otherwise. Where properties of a material are referred to hereinafter, for example viscosities or the like, these are the properties of the material at 25°C, unless stated otherwise. Where chemical (empirical) formulae are used in the present invention, the specified indices may be not only absolute numbers but also average values.

The present invention is directed to a rubber mixture comprising rubber and a liquid polybutadiene, the polybutadiene being liquid at a temperature of 20 °C and a pressure of 98.0665 kPa, wherein in said liquid polybutadiene comprises the 1,3-butadiene-derived monomer units 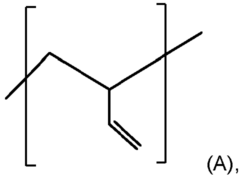 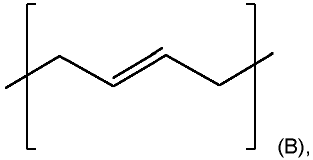 and 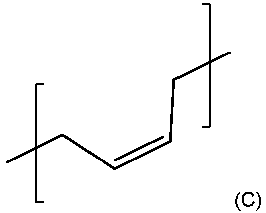 and wherein the proportion of A in the entirety of the 1,3-butadiene-derived monomer units present in the liquid polybutadiene is from 55 to 70 mol % and wherein the sum of the proportions of B and C in the entirety of the 1,3-butadiene-derived monomer units present in the liquid polybutadiene is from 30 to 45 mol %, and that the liquid polybutadiene only consists of C- and H-atoms, and has an average molecular weight (Mw), determined by gel permeation chromatography as described in the description, of from 1500 to 5000 g/mol.

The liquid polybutadiene only consists of C- and H-atoms. Therefore, a preferred liquid polybutadiene is a non-functionalized polybutadiene. The liquid polybutadiene has preferably an average molecular weight (Mw), determined by gel permeation chromatography (as described below in the example section), of from 1750 to 3500 g/mol.

The liquid polybutadiene has preferably a viscosity at 23 °C measured as described in the example section of from 1000 to 12000 mPas, more preferably of from 3000 to 9000 mPas, and most preferably of from 5000 to 7000 mPas.

Suitable liquid polybutadienes can be obtained via catalytic polymerization as described in WO 2018130703 A1 (EP 3348589 B1), especially in examples 1 to 3.

The rubber mixtures according to the invention may further comprise rubber(s), filler(s), preferably precipitated silica and/or silanes, preferably and carbon black, and optionally further rubber auxiliaries.

Fillers employable for the inventive rubber mixtures include for example:
- Carbon blacks: Preferred carbon blacks for use in the present invention are produced by the lamp black, furnace black or gas black process and preferably have BET surface areas of from 20 to 200 m²/g, for example SAF, ISAF, HSAF, HAF, FEF or GPF blacks. The carbon blacks may optionally also contain heteroatoms, for example Si.
- Silicas, preferably precipitated silicas, produced, for example, by precipitation of solutions of silicates, preferably water glass, or prepared by flame hydrolysis of silicon halides, having preferably specific surface areas of from 5 to 1000 m²/g. The precipitated silica may preferably have a BET surface area of 20 to 400 m²/g, particularly preferably of 80 to 280 m²/g, very particularly preferably of 150 to 210 m²/g and exceedingly preferably of 80 to 185 m²/g. The precipitated silica may have a mean primary particle size of 5 to 400 nm, preferably of 7 to 100 nm, particularly preferably of 7 to 40 nm. The silicas may optionally also be in the form of mixed oxides with other metal oxides, such as oxides of Al, Mg, Ca, Ba, Zn and titanium.
- Synthetic silicates, such as aluminum silicate, alkaline earth metal silicates such as magnesium silicate or calcium silicate, or zeolites. The synthetic silicates preferably having BET surface areas of 20 to 400 m²/g and primary particle diameters of 10 to 400 nm.
- Natural silicates, such as kaolin, mica, kieselguhr, diatomaceous earth, talc, wollastonite or clay, or other naturally occurring silicas.
- Glass fibers and glass fiber products (mats, strands, fabrics) or glass microbeads.
- Biopolymeric or biooligomeric fillers, e.g. natural or modified starch, cellulose, amylose, amylopectin, cellulose acetate, maltose, cellobiose, lactose, saccharose, raffinose, glycogen, pectins, chitin or natural or modified proteins.
- Other oxidic fillers, for example aluminum oxide, aluminum hydroxide ortrihydrate, zinc oxide, boron oxides, magnesium oxides or else transition metal oxides, such as titanium dioxide, or pyrogenic silicas.

The inventive rubber mixtures preferably comprise 0 to 150 parts by wt, more preferred 10 to 150 parts by wt of precipitated silica, 0 to 100 parts by wt, more preferred 1 to 10 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

A preferred inventive rubber mixture comprises 10 to 150 parts by wt of precipitated silica, 0 to 100 parts by wt, more preferred 1 to 10 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

Another preferred inventive rubber mixture comprises 0 to 150 parts by wt, more preferred 0 to 10 parts by wt of precipitated silica, 1 to 100 parts by wt, more preferred 5 to 50 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

It might be advantageous, if the rubber mixtures according to the invention comprise one or more organosilanes. Preferably the rubber mixtures according to the invention comprise 0.5 to 20 parts by wt, preferably 1 to 16 parts by wt, particularly preferably 2 to 12 parts by wt, very particularly preferably 3 to 7 parts by wt, of organosilane(s) based on 100 parts by wt of rubber.

The organosilane(s) may be a silicone oil, alkylsilane, vinylsilane, ethoxysilyl-containing mercaptoorganylsilane, ethoxysilyl-containing thiocyanatoorganylsilane, ethoxysilyl-containing blocked mercaptoorganylsilane and/or ethoxysilyl-containing di/polysulphidic alkoxysilane.

The organosilane(s) may preferably be triethoxyalkylsilane, triethoxyvinylsilane, triethoxytriethoxysilyl-containing mercaptoorganylsilane, triethoxysilyl-containing thiocyanatoorganylsilane, triethoxysilyl-containing blocked mercaptoorganylsilane or triethoxysilyl-containing di/polysulphidic alkoxysilane.

Further organosilanes that may be employed include mercaptoorganyl(alkoxysilanes) having C₈H₁₇-O-, C₁₀H₂₁-O-, C₁₂H₂₅-O-, C₁₄H₂₉-O-, C₁₆H₃₃-O- or C₁₈H₃₇-O- groups bonded to the silicon.

Further organosilanes that may be employed include blocked mercaptoorganyl(alkoxysilanes) having C₈H₁₇-O-, C₁₀H₂₁-O-, C₁₂H₂₅-O-, C₁₄H₂₉-O-, C₁₆H₃₃-O- or C₁₈H₃₇-O- groups bonded to the silicon or blocked mercaptoorganyl(alkoxysilanes) having difunctional alcohols (diols) bonded to the silicon (for example NXT LowV, NXT Ultra-LowV or silanes of the NXT Z group of products from Momentive).

Further organosilanes that may be employed include polysulphidic alkoxysilanes of the formulae

EtO-Si(Me)₂-CH₂-CH₂-CH₂-S₂-CH₂-CH₂-CH₂-Si(Me)₂(OEt),

EtO-Si(Me)₂-CH₂-CH₂-CH₂-S₃-CH₂-CH₂-CH₂-Si(Me)₂(OEt)

or

EtO-Si(Me)₂-CH₂-CH₂-CH₂-S₄-CH₂-CH₂-CH₂-Si(Me)₂(OEt).

Further organosilanes that may be added to the inventive rubber mixtures include 3-mercaptopropyl(triethoxysilane) (for example Si 263 from Evonik Industries AG), 3-thiocyanatopropyl(triethoxysilane) (for example Si 264 from Evonik Industries AG), bis(triethoxysilylpropyl)polysulphide (for example Si 69 from Evonik Industries AG), bis(triethoxysilylpropyl)disulphide (for example Si 266 from Evonik Industries AG).

Further organosilanes that may be employed include alkylpolyether-alcohol-containing mercaptoorganylsilanes (for example Si 363 from Evonik Industries AG), alkylpolyether-alcohol-containing thiocyanatoorganylsilanes or / and alkylpolyether-alcohol-containing blocked mercaptoorganylsilanes or alkylpolyether-alcohol-containing polysulphidic silanes.

The alkylpolyether-alcohol-containing mercaptoorganylsilanes may be compounds of general formula (I)

(X)₃Si-R³-SH (I)

where X is an alkyl, alkoxy or alkylpolyether group and at least one X is an alkylpolyether group, R³ is a branched or unbranched, saturated or unsaturated, substituted or unsubstituted aliphatic, aromatic or mixed aliphatic/aromatic divalent hydrocarbon group.

The alkylpolyether-alcohol-containing blocked mercaptoorganylsilanes may be compounds of general formula (II)

(X)₃Si-R⁴-S-C(O)-R⁵ (II)

where X is an alkyl, alkoxy or alkylpolyether group and at least one X is an alkylpolyether group, R⁴ is a branched or unbranched, saturated or unsaturated, substituted or unsubstituted aliphatic, aromatic or mixed aliphatic/aromatic divalent hydrocarbon group and R⁵ is a branched or unbranched, saturated or unsaturated, substituted or unsubstituted aliphatic, aromatic or mixed aliphatic/aromatic monovalent hydrocarbon group, preferably C₁-C₂₅ -, particularly preferably C₂-C₂₂ -, very particularly preferably C₇-C₁₇ - and exceedingly preferably C₁₁-C₁₆ -hydrocarbon group.

The rubber in the rubber mixtures according to the invention might be one kind of rubber or a mixture of different kinds of rubbers. Preferably the rubber in the rubber mixture according to the invention is a mixture of different kind of rubbers. The rubber in the rubber mixture of the invention can be is selected from natural rubber and/or synthetic rubber. Preferred synthetic rubbers are described, for example, in W. Hofmann, Kautschuktechnologie [Rubber Technology], Genter Verlag, Stuttgart 1980. These include inter alia polybutadiene (BR), polyisoprene (IR), styrene/butadiene copolymers having styrene contents of 1 to 60 wt%, preferably 2 to 50 wt% (SBR), isobutylene/isoprene copolymers (IIR), butadiene/acrylonitrile copolymers having acrylonitrile contents of 5 to 60 wt%, preferably 10 to 50 wt% (NBR), partly hydrogenated or fully hydrogenated NBR rubber (HNBR), ethylene/propylene/diene copolymers (EPDM) and mixtures of these rubbers. Of interest for the production of motor vehicle tires are, in particular, anionically polymerized S-SBR rubbers, preferably having a glass transition temperature above -50 °C, and mixtures thereof with diene rubbers. Rubbers which may preferably be employed include natural rubber or mixtures of natural rubber and diene rubber, preferably polybutadiene, polyisobutene or styrene butadiene copolymer.

Most preferably the rubber in the rubber mixture according to the invention is a mixture of Neodymium butadiene rubber (Nd-BR) and styrene-butadiene random copolymer (S-SBR).

The rubber mixture according to the invention may comprise further rubber auxiliary products such as reaction accelerants, ageing stabilizers, thermal stabilizers, light stabilizers, antiozonants, processing auxiliaries, plasticizers, resins, tackifiers, blowing agents, dyes, pigments, waxes, extenders, organic acids, retardants, metal oxides, and/or activators such as triethanolamine, polyethylene glycol, hexanetriol, which are known to the rubber industry.

The rubber auxiliaries are preferably used in typical amounts determined inter alia by the end use. Typical amounts are, for example, amounts of 0.1 to 50 parts by wt based on rubber. It is generally advisable to add further crosslinkers. Further known crosslinkers that may be used include sulphur or peroxides. The inventive rubber mixtures may additionally comprise vulcanization accelerators. Examples of suitable vulcanization accelerators include mercaptobenzothiazoles, sulphenamides, guanidines, thiurams, dithiocarbamates, thioureas and thiocarbonates. The vulcanization accelerators and sulfur or peroxides can be used in amounts of 0.1 to 10 parts by wt, preferably 0.1 to 5 parts by wt, based on 100 parts by wt of rubber.

The rubber mixtures according to the invention can be obtained by using mixing procedures and mixing equipment known in the art. The blending of the rubbers with the inventive liquid polybutadienes and optionally filler and any rubber auxiliaries, may preferably be carried out in customary mixing units, such as rollers, internal mixers and mixing extruders. The rubber mixtures according to the invention can also be obtained by so called liquid-phase mixing, continuous liquid phase mixing or combining masterbatches as described in the prior art.

The addition of the liquid polybutadienes and/or, preferably and, the addition of the fillers is preferably effected at material temperatures of 50 °C to 200 °C, more preferable at 80 °C to 185 °C, even more preferable between 100°C to 185 °C and particularly preferably at material temperatures of 130 °C to 170 °C, but can also be effected at a later or very early stage at material temperatures of from 40 °C to 100 °C, for example together with further rubber auxiliaries.

The liquid polybutadienes may be added to the mixing operation either in pure form or else applied to an organic or inorganic carrier. Preferred carrier materials are silicas, natural or synthetic silicates, aluminum oxide, waxes, polymers, especially polyethylene or polyethylene waxes, or carbon blacks.

The rubber mixtures of the present invention can be used for every purpose that rubber mixtures of the prior art can be used for too. The rubber mixtures according to the invention may preferably be used for producing molded articles, in particular pneumatic tires, lightweight tires or tire treads.

Preferably the rubber mixture of the invention is used as raw material in the process for preparing rubber articles by vulcanization of rubber mixtures according to the invention. The present invention is therefore also directed to an inventive process for preparing rubber articles by vulcanization of rubber mixtures, wherein the rubber mixture of the invention is used as raw material. The vulcanization of the inventive rubber mixtures is preferably carried out at temperatures of from 100 °C to 200 °C, preferably of from 130 °C to 180°C, optionally under a pressure of from 10 to 200 bar. The rubber vulcanizates thus obtained are suitable for producing molded articles. The inventive rubber mixtures may be used for producing tires, profiles, cable sheaths, hoses, drive belts, conveyor belts, tire treads, shoe soles, sealing rings and damping elements. If necessary, for one of the articles listed above, the inventive rubber mixes can also be vulcanized with alternative vulcanization methods in a continuous or discontinuous process in which for example radiation, e.g. microwave or a hot salt bath is used.

The present invention is further directed to rubber articles (products) obtained by the process according to the invention. The rubber articles according to the invention preferably are tires or part(s) of a tire. More preferably the rubber articles according to the invention are tire treads. Most preferably the rubber articles according to the invention are all-season tires or a snow (winter) tires or tire treads thereof.

Even without further exposition it is believed that a person skilled in the art will be able to make the widest use of the above description. The preferred embodiments and examples are therefore to be understood merely as a descriptive disclosure which is not in any way intended to be limiting.

The present invention will now be described more particularly with reference to examples. Alternative embodiments of the present invention are obtainable analogously.

### Examples

### Raw materials employed:

The raw materials employed are given in table 1 below.

**Table 1: Raw materials used**

| Name | Material | Abbreviation | Producer |
|---|---|---|---|
| Europrene^{®} SOL R 72613 | Solution polymerized, dry styrene-butadiene random copolymer that contains a non-staining antioxidant | S-SBR | Versalis S.p.A. |
| Buna^{®} CB 24 | Neodymium Butadiene Rubber, not oil extended; cis 1,4 content: min. 96 %. | Nd-BR | ARLANXEO Deutschland GmbH |
| LBR 307 | Liquid polybutadiene with a ratio of 1,2-vinyl groups of about 16 % | LBR 16% | Kuraray |
| Ricon^{®} 131 | Liquid polybutadiene with a ratio of 1,2-vinyl groups of about 21 % | LBR 21% | Cray Valley |
| Inventive product | Liquid polybutadiene with a ratio of 1,2-vinyl groups of about 60 % | LBR 60% | Evonik Resource Efficiency GmbH |
| VIVATEC^{®} 500 | plasticizer oil (Treated Distillated Aromatic Extract) | TDAE | H&R GmbH Co, KGaA |
| ULTRASIL^{®} 7000 GR | precipitated silica | U7000GR | Evonik Resource Efficiency GmbH |
| Si 266^{™} | bifunctional silane | Si 266 | Evonik Resource Efficiency GmbH |
| CORAX^{®} N330 | Carbon black | CB | Orion Engineered Carbons GmbH |
| ZnO RS RAL 844 C | zinc oxide | ZnO | Carl Arnsperger Chemikalien GmbH & Co |
| Edenor^{®} ST1 GS | stearic acid | ST1 | Caldic Deutschland GmbH |
| Rhenogran^{®} DPG-80 | dipropylene glycol 80 % Wirkstoff | DPG | Rhein Chemie additives GmbH |
| Rubber Accelerator TBZTD-OP | tetrabenzylthiuram disulfide | TBzTD | WEBER & SCHAER GmbH & Co, KG (produced by Dalian Richon) |
| Vulkacit^{®} CZ/EG-C | N-cyclohexyl-2-benzothiazolesulfenamide | CBS | LANXESS Deutschland GmbH |
| Sulfur | pulverized sulfur | | HENSELER GmbH |

The amount of vinyl monomer units was determined by IR spectroscopy as described below. LBR 60% obtainable as described in Example 3 of WO 2018130703 A1.

### Methods:

### Determination of the micro-structure:

IR spectroscopy using polybutadiene standards were used for determination of the molar ratio of the monomer units according to formula (A), (B), and (C). 80 to 250 mg samples of the polybutadiene to be examined were dissolved in 10 mL of carbon disulfide (CS₂). If high amounts of monomer units of formula (A) are expected, low concentration (e.g. 80 mg samples) of the polybutadiene is used, if high amounts of monomer units of formula (C) are expected, a higher concentration (e.g. 250 mg samples) of the polybutadiene is used. The termination is done using IR cuvettes (KBr) with a thickness of 0.5 mm. The solvent is subtracted and the spectrum is shown in the evaluation range of extinction from 1100 bis 600 cm⁻¹. If the resultant extinction exceeds 1, the measurement is repeated using a lower concentration of polybutadiene. The extinctions above base line of the following signals were determined:
trans-1,4-Polybutadiene: 968 cm⁻¹
1,2-Polybutadiene: 911 cm⁻¹
cis-1,4-Polybutadiene: 730 cm⁻¹

The molar ratio of the monomer units is calculated according to the following formula: $% Comp \left(i\right) = Ext \left(i\right) * 100 % / \left(E\left(i\right)*c*d*\right)$ with
Ext(i) = Extinction above base line
E(i) = Extinction coefficient (substance-specific, determined by calibration measurements) [E] = L/(g*cm)
d = thickness of the cuvette in cm
c = concentration of the sample in g/L.

### Mooney-Viscosity:

Mooney viscosity of the raw rubber mixture was determined at 100 °C. The value M_{S} (1+4) / MU was determined according to DIN 53523/3, ISO 289-1, and the value M_{L} (1+4) / MU was determined according to DIN 53523/3, ISO 289-2.

### Tensile strength:

The maximum tensile strength, given in MPa, and the elongation at break, given in %, of the vulcanizate were determined according to DIN 53504 / ISO 37. The measurements were done at a temperature of 23 °C using a standard dumb-bell S1 type specimen. The pull-off speed was set to 500 mm/min.

### Shore-A-Hardness:

The Shore-A-Hardness of the vulcanizates given in SH was determined according to ISO 7619-1 using a test temperature of 23 °C.

### Ball Rebound:

The rebound resilience of the vulcanizates given in % was determined according to ASTM D 2632 using a steel ball with a weight of 28 g and a diameter of 19 mm and a drop height of 500 mm.

### Viscoelastic Properties:

Viscoelastic properties of the vulcanizates were determined according to ASTM D 6601-02, DIN 53513 / ISO 4664-1, and ISO 1827.

The maximum loss factor (tan δ max) was determined according to ASTM D 6601-02 using a RPA 2000 from Alpha Technologies as described in the operators manual dated February 1997 at 60 °C and 1.6 Hz within a range of from 0.28 % to 42.0 % elongation.

The complex modulus E* given in MPa of the vulcanizate was determined according to DIN 53513 / ISO 4664-1 using a Zwick Rel 2100, servo-hydraulic testing machine from ZwickRoell GmbH & Co. KG at 16 Hz, with an initial force of 50 N, an amplitude force of 25 N, a temperature adjustment time of 5 min. and a value recording after a testing time of 30 sec.

The complex shear modulus G* in MPa and dissipation factor tan δ were determined according to ISO 1827 using a EPLEXOR^{®} 4000N (Serial No. 1101, NETZSCH GABO Instruments GmbH) in temperature sweep mode with 1.6 Hz, a dynamic deformation of 0.2 %, a static deformation of 0.0%, and a temperature range of from -80 °C to 80 °C.

The molecular weight of the polybutadienes was determined using gel permeation chromatography. Measurements were carried out at 40°C in tetrahydrofuran (THF) at a concentration of 1 g/L and a flow rate of 0.3 ml/min. Chromatographic separation was achieved using a PSS SDV Micro 5µ / 4.6 x 30 mm precolumn and a PSS SDV Micro linear S 5µ / 4.6 x 250 mm (2x) separation column. Detection was by means of an RI detector. Calibration was carried out by means of a polybutadiene standard (PSS-Kit polybutadiene-1,4, Mp 831-106000, Part No.: PSS-bdfkit, Mn: 1830/4330/9300/18000/33500).

### Viscosity:

The viscosities (cone-plate) of the polybutadienes were determined to DIN 53018 with a Rheometer Physica MCR 301 from ANTON PAAR Germany GmbH.

### Example 1:

The formulation used for the rubber mixtures is specified in table 2 below for stage 1, 2, and 3. In this table, the unit phr means parts by weight based on 100 parts of rubber (S-SBR and Nd-BR) employed. The liquid polybutadiene (LBR) is employed as substitute for plasticizer oil "TDAE" in the inventive rubber mixtures in varying amounts.

**Table 2 Composition of the rubber mixtures used**

| Raw material (abbreviation) | Reference rubber mixture I | Reference rubber mixture II | Reference rubber mixture III | Inventive rubber mixture IV |
|---|---|---|---|---|
| 1^{st} stage | phr | phr | phr | Phr |
| S-SBR | 70.00 | 70.00 | 70.00 | 70.00 |
| Nd-BR | 30.00 | 30.00 | 30.00 | 30.00 |
| U7000GR | 80.00 | 80.00 | 80.00 | 80.00 |
| Si 266 | 5.80 | 5.80 | 5.80 | 5.80 |
| TDAE | 25.00 | | | |
| LBR 16% | - | 25.00 | - | - |
| LBR 21% | - | - | 25.00 | - |
| LBR 60% | - | - | - | 25.00 |
| CB | 5.00 | 5.00 | 5.00 | 5.00 |
| ZnO | 2.00 | 2.00 | 2.00 | 2.00 |
| ST1 | 2.00 | 2.00 | 2.00 | 2.00 |
| 2^{nd} stage | | | | |
| Batch 1^{st} stage | | | | |
| DPG | 2.5 | 2.5 | 2.5 | 2.5 |
| 3^{rd} stage | | | | |
| Batch 2^{nd} stage | | | | |
| TBzTD | 0.20 | 0.20 | 0.20 | 0.20 |
| CBS | 1.60 | 1.60 | 1.60 | 1.60 |
| Sulfur | 2.00 | 2.00 | 2.00 | 2.00 |

The amount of plastizicer oil, e.g. the LBR XX% and the TDAE, were given to the mixture using processible LDPE bags (Polybeutel 150 × 200 mm, IGEFA Handelsgesellschaft) having a low melting point, filled with 5.0 phr each.

The general process for producing rubber mixtures and vulcanizates thereof is described in "Rubber Technology Handbook", W. Hofmann, Hanser Verlag 1994.

The equipment and the parameters used for processing each rubber mixture are given for stage 1 in table 3a, for stage 2 in table 3b, and for stage 3 in table 3c below.

**Table 3a equipment and parameters used for processing of each rubber mixture in stage 1**

| | **stage 1** |
|---|---|
| **settings** | |
| mixing unit | HF mixing group GmbH; type GK 1.5 E (Harburg-Freudenberger Maschinenbau GmbH) |
| Fill factor | 0.66 |
| speed | 65 rpm |
| ram pressure | 5.5 bar |
| Mixing chamber temperature | 70 °C |
| Friction ratio | 1:1 |

| **mixing operation** | |
|---|---|
| 0.0 min to 0.5 min | addition of S-SBR, Nd-BR, and 1^{st} bag of plasticizer oil |
| 0.5 min to 1.0 min | addition of 2^{nd} bag of plasticizer oil |
| 1.0 min to 2.0 min | addition of ½ amount of U7000GR and full amount of Si 266, CB, ZnO, ST1 and 3^{rd} bag of plasticizer oil |
| 2.0 min to 2.0 min | aerate and purge (lifting the piston) |
| 2.0 min to 3.0 min | addition of 2^{nd} ½ of U7000GR and 4^{th} bag of plasticizer oil |
| 3.0 min to 3.0 min | aerate and purge (lifting the piston) |
| 3.0 min to 7.0 min | addition of 5^{th} bag of plasticizer oil and mixing at 140 to 155°C (temperature adjusted within this range by varying the speed) |
| 7.0 min | discharge and weigh the batch. Finally form a milled sheet on laboratory two roll mill for 45 s (laboratory roll mill: diameter 250 mm, length 190 mm, roll gap 4 mm, flow temperature 60°C, speed front roll 25 rpm, speed back roll 18 rpm) |
| | 24 h storage at a temperature of 23 °C |

**Table 3b equipment and parameters used for processing of each rubber mixture in stage 2**

| | **stage 2** |
|---|---|
| **settings** | |
| mixing unit | as in stage 1 |
| Fill factor | 0.63 |
| speed | 70 rpm |
| ram pressure | 5.5 bar |
| Mixing chamber temperature | 75 °C |

| **mixing operation** | |
|---|---|
| 0.0 min to 1.0 min | addition and plasticize of stage 1 batch |
| 1.0 min to 3.0 min | addition of DPG and mixing at 140 to 155°C (temperature adjusted within this range by varying the speed) |
| 3.0 min | discharge and weigh the batch. Finally form a milled sheet on laboratory two roll mill for 45 s, (laboratory roll mill: diameter 250 mm, length 190 mm, roll gap 4 mm, flow temperature 60°C, speed front roll 25 rpm, speed back roll 18 rpm) |
| | storage at 23 °C for up to 24 hours |

**Table 3c equipment and parameters used for processing of each rubber mixture in stage 3**

| | **stage 3** |
|---|---|
| **settings** | |
| mixing unit | as in stage 1 |
| fill level | 0.60 |
| speed | 55 rpm |
| Mixing chamber temperature. | 50 °C |

| **mixing operation** | |
|---|---|
| 0.0 min to 2.0 min | Plasticize stage 2 batch, adding CBS, TBZTD and sulfur. Mixing at 90 to 110 °C (temperature adjusted within this range by varying the speed) |
| 2.0 min | discharge and weigh the batch. Finally form a milled sheet on laboratory two roll mill for 20 s (laboratory roll mill: diameter 250 mm, length 190 mm, roll gap 4 mm, flow temperature 80°C, speed front roll 16 rpm, speed back roll 11.5 rpm) then, cut and fold over 3* to the right, 3* to the left, and roll 3* with a narrow roll gap (3 mm) and then draw off a milled sheet via roll mill gab with 4 mm. |

The Mooney viscosity of the rubber mixtures (sheets) obtained after 1^{st} and 3^{rd} stage was determined as described above. The results are given in table 4.

The rubber mixtures obtained after stage 3 were vulcanized to obtain the test plates and test specimens. Vulcanization was carried out at a temperature of 165 °C in a typical vulcanizing press for 17 minutes with a compression pressure of 130 bar as per the optimum cure time of t₉₅. The t₉₅ time was determined by moving die rheometer (rotorless vulcameter) according to DIN 53529/3 procedure at 165 °C.

The rubber testing was executed in accordance with the test methods specified above. The results of the rubber testing are also given in table 4.

**Table 4 results of the rubber testing**

| | Reference rubber mixture I | Reference rubber mixture II | Reference rubber mixture III | Inventive rubber mixture IV |
|---|---|---|---|---|
| M_{S} (1+4); (1. stage) / MU | 145 | 145 | 132 | 128 |
| M_{L} (1+4); (3. stage) / MU | 87 | 85 | 83 | 82 |
| Tensile strength at break / MPa | 13.5 | 10.7 | 10.5 | 13.6 |
| Elongation at break / % | 240 | 250 | 230 | 270 |
| Shore-A-Hardness / SH | 69 | 66 | 67 | 68 |
| Ball Rebound at 60 °C / % | 60 | 55 | 55 | 57 |
| Loss factor maximum at 60 °C; tan δ max / - | 0.188 | 0.199 | 0.217 | 0.187 |
| complex modulus E* at 60 °C / MPa | 10.2 | 10.1 | 9.7 | 10.5 |
| complex shear modulus G* at 60 °C / MPa | 3.6 | 2.9 | 2.7 | 3.3 |
| loss factor tan δ at -10 °C / - | 0.276 | 0.240 | 0.243 | 0.251 |

The inventive rubber mixture IV has an improved processability compared to the rubber mixtures I to III, indicated by the lower Mooney viscosity values for the inventive rubber mixture IV after 1^{st} and 3^{rd} stage.

Surprisingly, the rubber mixture IV used in the invention achieves an enhanced reinforcing effect to all other mixtures, as it not only has the highest tensile strength but also the highest elongation at break. With approximately the same hardness, the dynamic data can be compared well. Rubber mixture IV according to the invention, has a lower hysteresis in the dynamic tests at 60 °C, which are important for predicting rolling resistance, compared to the reference rubber mixtures I, II, and III.

This can be seen in the increased Ball Rebound values, i.e. improved values compared to the other compounds containing liquid polybutadienes and is confirmed in the lowest tan δ max value measured at 60 °C. Thus, the rubber mixture according to the invention should lead to improved rolling resistance and lower fuel consumption if a tire is equipped with a tread based on the rubber mixture according to the invention.

At the same time, the rubber mixture IV according to the invention can achieve high dynamic complex moduli measured at elevated temperatures of 60 °C (E* and G* at 60 °C), which is an indicator to predict the dry traction of passenger car tire as per the literature. Especially compared to the reference rubber mixtures II and III, an improved dry handling of a passenger car tire equipped with a tread compound according to the rubber mixture IV according to the invention can be expected. In addition, the rubber mixture IV according to the invention shows a higher loss factor value than the reference rubber mixtures II and III at -10 °C. According to the relevant literature, this should lead to improved winter properties and/or have a positive influence on wet grip if this mixture is used to be the basis for a winter tire tread mixture.

## Claims

1. Rubber mixture comprising rubber and a liquid polybutadiene, liquid at a temperature of 20 °C and a pressure of 98.0665 kPa, **characterized in that** the liquid polybutadiene comprises the 1,3-butadiene-derived monomer units 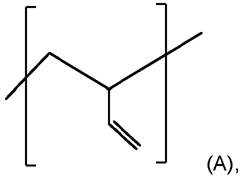 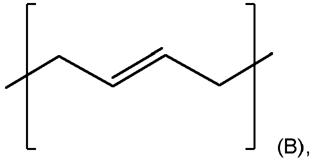 and 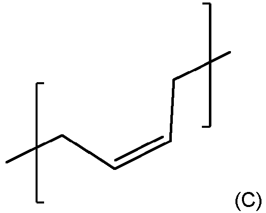 and wherein the proportion of A in the entirety of the 1,3-butadiene-derived monomer units present in the liquid polybutadiene is from 55 to 70 mol % and wherein the sum of the proportions of B and C in the entirety of the 1,3-butadiene-derived monomer units present in the liquid polybutadiene is from 30 to 45 mol %, and that the liquid polybutadiene only consists of C- and H-atoms, and has a weight-average molecular weight (Mw), determined by gel permeation chromatography as described in the description, of from 1500 to 5000 g/mol.

2. Rubber mixtures according to Claim 1, **characterized in that** said mixtures comprise 0 to 150 parts by wt of precipitated silica, 0 to 100 parts by wt of carbon black and 1 to 50 parts by wt of the liquid polybutadiene, in each case based on 100 parts by weight of rubber.

3. Rubber mixtures according to any of Claim 1 or 2, **characterized in that** said mixtures comprise an organosilane.

4. Rubber mixtures according to Claim 3, **characterized in that** said mixtures comprise 0.5 to 20 parts by wt of organosilane based on 100 parts by wt of rubber.

5. Rubber mixtures according to any of Claim 1 to Claim 4, **characterized in that** said rubber is one kind of rubber or a mixture of different kinds of rubbers.

6. Rubber mixtures according to any of Claim 1 to Claim 5, **characterized in that** said rubber is selected from natural rubber and/or synthetic rubber.

7. Rubber mixtures according to Claim 5 or 6, **characterized in that** said rubber is a mixture of Nd-BR and S-SBR.

8. Rubber mixtures according to any of Claim 1 to Claim 7, **characterized in that** said liquid polybutadiene has a weight-average molecular weight (Mw), determined by gel permeation chromatography, of from 1750 to 3500 g/mol.

9. Process for preparing rubber articles by vulcanization of rubber mixtures, **characterized in that** a rubber mixture as claimed in any of Claim 1 to Claim 8 is used as raw material.

10. Rubber articles obtained by a process as claimed in Claim 9.

11. Rubber articles according to Claim 10, **characterized in that** it is a tire or a part of a tire.

12. Rubber articles according to Claim 11, **characterized in that** it is a tire tread.

13. Rubber articles according to Claim 11 or 12, **characterized in that** the tire is an all-season tire or a snow (winter) tire.

## Patentansprüche

1. Kautschukmischung, umfassend Kautschuk und ein flüssiges Polybutadien, das bei einer Temperatur von 20 °C und einem Druck von 98,0665 kPa flüssig ist, **dadurch gekennzeichnet, dass** das flüssige Polybutadien die von 1,3-Butadien abgeleiteten Monomereinheiten 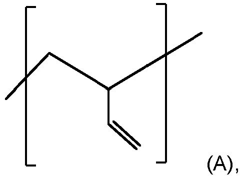 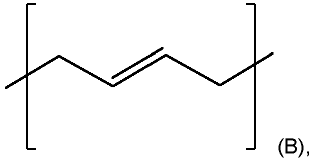 und 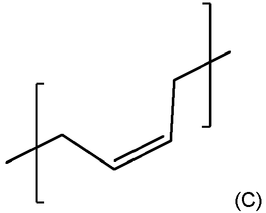 umfasst und wobei der Anteil von A an der Gesamtheit der von 1,3-Butadien abgeleiteten Monomereinheiten, die in dem flüssigen Polybutadien vorliegen, 55 bis 70 Mol-% beträgt und wobei die Summe der Anteile von B und C an der Gesamtheit der von 1,3-Butadien abgeleiteten Monomereinheiten, die in dem flüssigen Polybutadien vorliegen, 30 bis 45 Mol-% beträgt, und dass das flüssige Polybutadien nur aus C- und H-Atomen besteht und ein gewichtsmittleres Molekulargewicht (Mw), bestimmt durch Gelpermeationschromatographie wie in der Beschreibung beschrieben, 1500 bis 5000 g/mol aufweist.

2. Kautschukmischungen nach Anspruch 1, **dadurch gekennzeichnet, dass** die Mischungen 0 bis 150 Gew.-Teile Fällungskieselsäure, 0 bis 100 Gew.-Teile Ruß und 1 bis 50 Gew.-Teile des flüssigen Polybutadiens, jeweils bezogen auf 100 Gewichtsteile Kautschuk, umfassen.

3. Kautschukmischungen nach Anspruch 1 oder 2, **dadurch gekennzeichnet, dass** die Mischungen ein Organosilan umfassen.

4. Kautschukmischungen nach Anspruch 3, **dadurch gekennzeichnet, dass** die Mischungen 0,5 bis 20 Gew.-Teile Organosilan, bezogen auf 100 Gew.-Teile Kautschuk, umfassen.

5. Kautschukmischungen nach einem der Ansprüche 1 bis 4, **dadurch gekennzeichnet, dass** es sich bei dem Kautschuk um eine Art von Kautschuk oder eine Mischung verschiedener Arten von Kautschuken handelt.

6. Kautschukmischungen nach einem der Ansprüche 1 bis 5, **dadurch gekennzeichnet, dass** der Kautschuk aus Naturkautschuk und/oder Synthesekautschuk ausgewählt ist.

7. Kautschukmischungen nach Anspruch 5 oder 6, **dadurch gekennzeichnet, dass** es sich bei dem Kautschuk um eine Mischung von Nd-BR und S-SBR handelt.

8. Kautschukmischungen nach einem der Ansprüche 1 bis 7, **dadurch gekennzeichnet, dass** das flüssige Polybutadien ein gewichtsmittleres Molekulargewicht (Mw), bestimmt durch Gelpermeationschromatographie, von 1750 bis 3500 g/mol aufweist.

9. Verfahren zur Herstellung von Kautschukartikeln durch Vulkanisation von Kautschukmischungen, **dadurch gekennzeichnet, dass** als Ausgangsstoff eine Kautschukmischung gemäß einem der Ansprüche 1 bis 8 verwendet wird.

10. Kautschukartikel, erhalten nach einem Verfahren gemäß Anspruch 9.

11. Kautschukartikel nach Anspruch 10, **dadurch gekennzeichnet, dass** es sich um einen Reifen oder einen Teil eines Reifens handelt.

12. Kautschukartikel nach Anspruch 11, **dadurch gekennzeichnet, dass** es sich um eine Reifenlauffläche handelt.

13. Kautschukartikel nach Anspruch 11 oder 12, **dadurch gekennzeichnet, dass** es sich bei dem Reifen um einen Ganzjahresreifen oder einen Schneereifen (Winterreifen) handelt.

## Revendications

1. Mélange de caoutchouc comprenant un caoutchouc et un polybutadiène liquide, liquide à une température de 20 °C et une pression de 98,0665 kPa, **caractérisé en ce que** le polybutadiène liquide comprend les unités monomériques dérivées du 1,3-butadiène 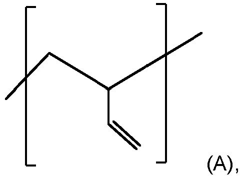 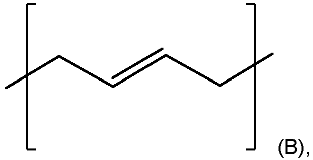 et 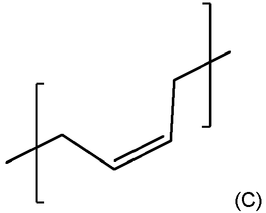 et dans lequel la proportion de A dans l'ensemble des unités monomériques dérivées du 1,3-butadiène présentes dans le polybutadiène liquide est de 55 à 70 % en moles et dans lequel la somme des proportions de B et C dans l'ensemble des unités monomériques dérivées du 1,3-butadiène présentes dans le polybutadiène liquide est de 30 à 45 % en moles, et que le polybutadiène liquide est seulement constitué d'atomes de C et de H, et possède un poids moléculaire en poids (Mw), déterminé par chromatographie par perméation de gel tel que décrit dans la description, de 1 500 à 5 000 g/mole.

2. Mélanges de caoutchouc selon la revendication 1, **caractérisés en ce que** lesdits mélanges comprennent 0 à 150 parties en poids de silice précipitée, 0 à 100 parties en poids de noir de carbone et 1 à 50 parties en poids de polybutadiène liquide, dans chaque cas sur la base de 100 parties en poids de caoutchouc.

3. Mélanges de caoutchouc selon l'une quelconque des revendications 1 ou 2, **caractérisés en ce que** lesdits mélanges comprennent un organosilane.

4. Mélanges de caoutchouc selon la revendication 3, **caractérisés en ce que** lesdits mélanges comprennent 0,5 à 20 parties en poids d'organosilane sur la base de 100 parties en poids de caoutchouc.

5. Mélanges de caoutchouc selon l'une quelconque des revendications 1 à 4, **caractérisés en ce que** ledit caoutchouc est un type de caoutchouc ou un mélange de différents types de caoutchouc.

6. Mélanges de caoutchouc selon l'une quelconque des revendications 1 à 5, **caractérisés en ce que** ledit caoutchouc est choisi parmi un caoutchouc naturel et/ou un caoutchouc synthétique.

7. Mélanges de caoutchouc selon la revendication 5 ou 6, **caractérisés en ce que** ledit caoutchouc est un mélange de Nd-BR et S-SBR.

8. Mélanges de caoutchouc selon l'une quelconque parmi la revendication 1 à la revendication 7, **caractérisés en ce que** ledit polybutadiène liquide a un poids moléculaire moyen en poids (Mw), déterminé par chromatographie par perméation de gel, de 1 750 à 3 500 g/mole.

9. Procédé de préparation d'articles en caoutchouc par vulcanisation de mélanges de caoutchouc, **caractérisé en ce qu'**on utilise comme matière première un mélange de caoutchouc selon l'une quelconque des revendications 1 à 8.

10. Articles en caoutchouc obtenus par un procédé selon la revendication 9.

11. Articles en caoutchouc selon la revendication 10, **caractérisés en ce qu'**il s'agit d'un pneumatique ou d'une partie d'un pneumatique.

12. Articles en caoutchouc selon la revendication 11, **caractérisés en ce qu'**il s'agit d'une bande de roulement de pneumatique.

13. Articles en caoutchouc selon la revendication 11 ou 12, **caractérisés en ce que** le pneumatique est un pneumatique toutes saisons ou un pneumatique neige (hiver).
